# FASCICULE DE BREVET EUROPEEN

(11) **EP 3 150 754 B1**
(45) Date de publication et mention de la délivrance du brevet: **11.04.2018**
(21) Numéro de dépôt: 16190994.0
(22) Date de dépôt: 28.09.2016
(51) Int. Cl.: D03C 3/20, D03C 3/24, D03C 3/32

(54) **SYSTÈME DE CONTRÔLE D'UNE MÉCANIQUE JACQUARD, MÉCANIQUE JACQUARD ET MÉTIER À TISSER ÉQUIPÉS D'UN TEL SYSTÈME**
KONTROLLSYSTEM EINER JACQUARD-MASCHINE, JACQUARD-MASCHINE UND MIT EINEM SOLCHEN SYSTEM AUSGESTATTETER WEBRAHMEN
CONTROL SYSTEM FOR A JACQUARD MECHANISM, JACQUARD MECHANISM AND WEAVING MACHINE EQUIPPED WITH SUCH A SYSTEM

(30) Priorité: 29.09.2015 FR 1559152
(43) Date de publication de la demande: 05.04.2017
(73) Titulaire: STAUBLI LYON, 69680 Chassieu (FR)
(72) Inventeur: VANDROUX, Philippe, 69680 Chassieu (FR); PRZYTARSKI, Patrice, 69970 Chaponnay (FR)
(74) Mandataire: Lavoix

(56) Documents cités:
- EP-A1- 0 214 075
- EP-A1- 2 330 237
- EP-A2- 1 559 816
- CN-A- 101 054 752

## Description

L'invention a trait à un système de contrôle d'une mécanique Jacquard pour la formation de la foule sur un métier à tisser. L'invention a également trait à une mécanique Jacquard comprenant un tel système de contrôle, ainsi qu'à un métier à tisser équipé d'une telle mécanique.

Dans le domaine des métiers à tisser de type Jacquard, il est connu, par exemple de EP-A-0 214 075, d'utiliser des dispositifs de sélection pour retenir, au voisinage du point mort haut de leur trajectoire, des crochets mobiles déplacés verticalement par des couteaux ou griffes animés d'un mouvement de va-et-vient vertical. Ces dispositifs de sélection sont regroupés par huit dans des ensembles appelés « modules ». Ces dispositifs de sélection comprennent des électroaimants qui doivent être sélectivement alimentés pour agir sur des leviers pivotants, en fonction de l'armure à réaliser, afin de retenir ou non un crochet mobile au voisinage du point mort haut de sa trajectoire.

Il importe d'assurer la commande de la sélection des crochets d'une machine Jacquard en synchronisme avec le métier équipé de cette machine. Une mécanique Jacquard peut compter de mille à plus quatorze mille crochets qui doivent pouvoir être sélectionnés suivant une armure de dessin. Les métiers à tisser Jacquard peuvent maintenant tisser à des vitesses d'insertion dépassant les mille duites par minute. La sélection doit alors pouvoir s'opérer toutes les soixante millisecondes. Une armure de dessin peut contenir plusieurs milliers de duites. Le système de commande de la sélection des crochets dans une machine Jacquard doit donc gérer une quantité importante d'informations dans un temps très court. Toute erreur de sélection se traduit par un défaut sur le tissu, une telle erreur pouvant provenir d'un défaut de transmission des données au dispositif de sélection ou de la défaillance d'un élément du système de commande.

Pour traiter cette problématique, il est connu de EP-A-2 330 237 de constituer un système de contrôle d'une ou plusieurs mécaniques Jacquard à partir d'un contrôleur principal et d'au moins deux contrôleurs secondaires, chacun de ces contrôleurs comportant au moins un calculateur et au moins une mémoire, alors que chaque contrôleur secondaire est apte à commander un groupe de dispositifs de sélection. Plus particulièrement, chaque contrôleur secondaire adresse à des unités de commande associées des ordres d'alimenter ou de ne pas alimenter des électroaimants appartenant aux dispositifs de sélection, ces ordres étant codés informatiquement de façon binaire. Le contrôleur principal a pour fonction d'assurer que l'alimentation des électroaimants ait lieu au bon moment au cours d'un cycle de tissage. Les électroaimants étant regroupés par modules de huit, les unités de commande sont formées par des cartes électroniques qui supportent des circuits de commande de huit transistors dont le collecteur ouvert est relié à une borne de la bobine de chaque électroaimant, ainsi qu'un registre à décalage de huit bits dont les sorties commandent ces huit transistors. Plusieurs cartes supportant des unités de commande d'électroaimants sont connectées en série à chaque contrôleur secondaire. Ceci impose de raccorder les cartes des unités de commande d'électroaimants au moyen d'une connexion série formée par des câbles souples, le plus souvent regroupés en nappes souples parfois dénommées « limandes ». Ces connexions doivent être amovibles pour permettre les opérations de maintenance de la machine Jacquard.

Ce système de contrôle est satisfaisant. Toutefois, le nombre important de connexions nécessaires pour le contrôle des électroaimants augmente les risques d'erreurs dans la transmission des signaux de commande.

C'est à ces inconvénients qu'entend plus particulièrement remédier l'invention en proposant un nouveau système de contrôle d'au moins une machine Jacquard dont l'architecture diminue les risques d'erreurs dans la transmission des signaux de commande des électroaimants.

A cet effet, l'invention concerne un système de contrôle d'au moins une machine Jacquard de formation de la foule comprenant des dispositifs de sélection électromécaniques incluant des électroaimants. Ce système de contrôle comprend :
- un contrôleur principal destiné à communiquer avec un métier à tisser équipé de la machine Jacquard et comportant au moins une mémoire pour le stockage de données d'armure de dessin et au moins un calculateur apte à gérer l'édition et la modification de ces données d'armure ;
- au moins deux contrôleurs secondaires, connectés chacun électriquement au contrôleur principal et aptes à commander chacun un groupe de dispositifs de sélection électromécaniques, chaque contrôleur secondaire comprenant au moins une mémoire pour le stockage de données d'armure de dessin et au moins un calculateur ;
- des unités de commande d'électroaimants associées chacune à au moins un dispositif de sélection électromécanique, chaque unité de commande étant connectée électriquement à un contrôleur secondaire et comprenant un registre à décalage de réception des états d'activation des électroaimants qu'elles commandent.

Conformément à l'invention, le système de contrôle comprend au moins un contrôleur intermédiaire en liaison électrique directe, d'une part, avec un des contrôleurs secondaires et, d'autre part, avec au moins deux unités de commande d'électroaimants.

Grâce à l'invention, le nombre de fils de connexion nécessaires à l'alimentation des unités de commande d'électroaimants peut être réduit par rapport aux systèmes connus. En effet, le contrôleur intermédiaire assure une partie de ces liaisons. En outre, la configuration du système de contrôle en fonction du format de la machine Jacquard n'impose pas d'adapter ou de modifier des connexions électriques entre les différentes unités de commande des électroaimants. En effet, les liaisons au sein d'un contrôleur intermédiaire peuvent être permanentes, notamment lorsqu'elles sont réalisées par composants électroniques ou des pistes imprimées sur une carte électronique.

Selon des aspects avantageux mais non obligatoires de l'invention, un tel système peut incorporer une ou plusieurs des caractéristiques suivantes, prises dans toute combinaison techniquement admissible :
- Les unités de commande d'électroaimants sont reliées électriquement en parallèle avec le contrôleur intermédiaire.
- Chaque contrôleur intermédiaire, toutes les unités de commande d'électroaimants électriquement connectées à ce contrôleur intermédiaire, ainsi que des pistes de liaison électrique entre ce contrôleur et ces unités de commande sont regroupés sur une même carte électronique. Ceci permet de diminuer le nombre de connecteurs amovibles du système de commande.
- Chaque unité de commande d'électroaimants est pourvue de moyens de détection de défaut d'un des électroaimants qu'elle contrôle. Comme chaque unité de commande est en relation directe avec le contrôleur intermédiaire, le défaut peut être localisé avec précision. Ceci tient également compte du fait que, comme mentionné ci-dessus, la liaison entre le contrôleur intermédiaire et les unités de commande peut être effectuée en parallèle.
- Les moyens de détection de défaut comprennent un circuit qui intègre le registre à décalage et des transistors d'alimentation des électroaimants commandés par l'unité de commande des électroaimants.
- Chaque contrôleur intermédiaire est configuré pour signaler, au contrôleur secondaire avec lequel il est en liaison électrique, un défaut détecté par une unité de commande d'électroaimants avec laquelle il est en liaison électrique.
- Chaque contrôleur intermédiaire est configuré pour effectuer une vérification de la transmission, entre le contrôleur secondaire avec lequel il est en liaison électrique et lui-même, de données d'activation des électroaimants commandés par les unités de commande avec lesquelles il est en liaison électrique. De cette façon, il est possible de localiser un problème de transmission. De plus, comme les transmissions entre le contrôleur principal et chaque contrôleur secondaire et/ou intermédiaire sont vérifiées, les défauts signalés au niveau des unités de commande des électroaimants peuvent être attribués à un dispositif de sélection de manière sûre. Ils ne correspondent pas à une erreur de connexion. Ceci évite un démontage inutile d'un module qui s'avère en pratique fonctionnel lorsqu'un défaut n'est en fait lié qu'à un problème de transmission ou de connexion.

Selon un autre aspect, l'invention concerne une carte électronique qui forme une pièce détachée pour un système de contrôle tel que décrit ci-dessus. Conformément à l'invention, cette carte électronique comporte un contrôleur intermédiaire, toutes les unités de commande d'électroaimants qui lui sont connectées et des pistes de liaison entre ce contrôleur et ces unités de commande, alors que chaque unité de commande montée sur la carte électronique est associée à au moins un dispositif de sélection électromécanique et comprend un registre à décalage de réception des états d'activation des électroaimants qu'elle commande.

L'invention concerne également une mécanique Jacquard comprenant des dispositifs de sélection électromécaniques, incluant chacun un électroaimant, ainsi que des unités de commande de ces électroaimants. Selon l'invention, cette mécanique Jacquard comprend un système de contrôle tel que mentionné ci-dessus et les unités de commande sont chacune reliées électriquement à un contrôleur intermédiaire du système de contrôle.

De façon avantageuse les électroaimants sont regroupés dans des modules qui contiennent également des crochets mobiles animés d'un mouvement d'oscillations verticales et cinématiquement reliés à des éléments funiculaires de suspension d'arcades d'un harnais Jacquard, alors que chaque contrôleur intermédiaire, les unités de commande associées et des pistes de liaison électrique sont regroupés sur une même carte électronique et que les modules contenant les électroaimants commandés par les unités de commande regroupées sur une même carte électronique sont directement raccordés à cette carte, sans utilisation de câbles électriques.

Enfin, l'invention concerne un métier à tisser équipé d'une mécanique Jacquard tel que décrit.

L'invention sera mieux comprise et d'autres avantages de celle-ci apparaîtront plus clairement à la lumière de la description qui va suivre, d'un mode de réalisation d'un métier à tisser équipé d'une mécanique Jacquard et d'un système de contrôle de cette mécanique conformes à l'invention, donnée uniquement à titre d'exemple et faite en référence aux dessins annexés dans lesquels :
- la figure 1 est une représentation schématique de principe d'un métier à tisser équipé d'une mécanique Jacquard et d'un système de contrôle conformes à l'invention ;
- la figure 2 est une vue à plus grande échelle du détail II à la figure 1 et
- la figure 3 est une vue en perspective d'une partie de la mécanique Jacquard représentée aux figures 1 et 2.

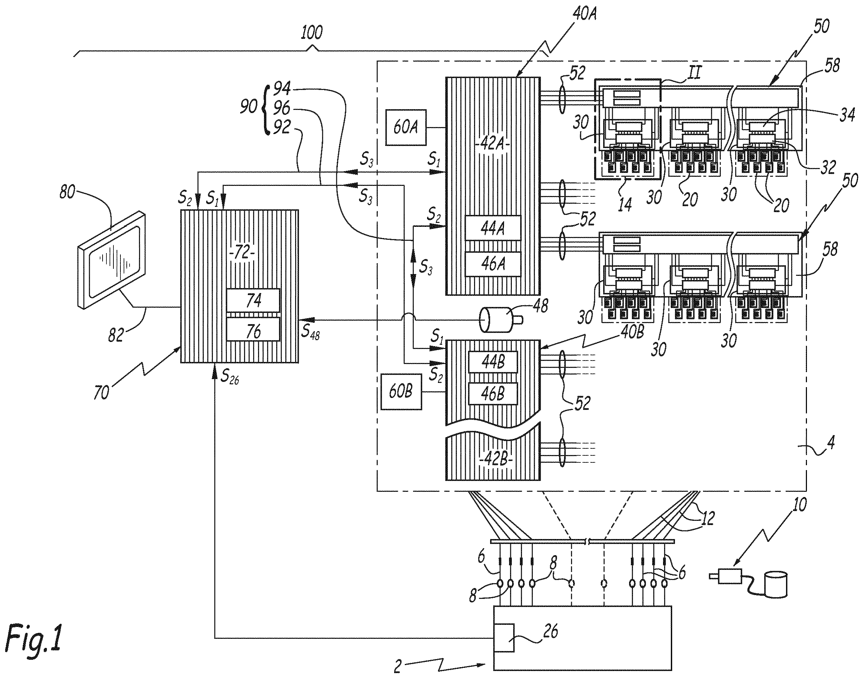

Le métier à tisser 2 représenté très schématiquement à la figure 1 est équipé d'une mécanique Jacquard électronique 4 qui commande le déplacement vertical de lisses 6 équipées d'oeillets 8 de passage de fils de chaîne non représentés. Un dispositif 10 est prévu pour insérer des fils de trame dans la foule formée par les fils de chaîne traversant les oeillets 8.

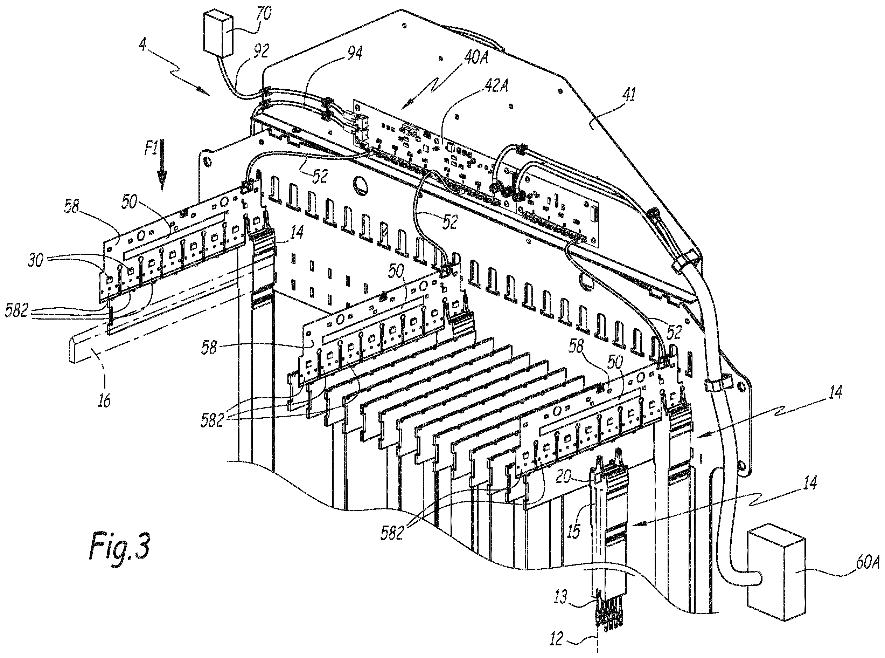

La position verticale des lisses 6 est commandée par des arcades 12 supportées par des palonniers non représentés, eux-mêmes suspendus à des éléments funiculaires 13 dont certains sont visibles à la figure 3 et dont les extrémités supérieures sont suspendues à des crochets mobiles en appui sur des couteaux ou griffes animés d'un mouvement de va-et-vient vertical, comme expliqué dans EP-A-0 214 075. Les crochets mobiles et les éléments funiculaires 13 sont regroupés, par groupe de huit éléments funiculaires, dans des modules 14 dont quatre sont visibles à la figure 3 qui montre la mécanique Jacquard 4 en cours d'assemblage. Cette figure 3 montre, par transparence, deux crochets mobiles 15 intégrés à un module 14. Cette figure 3 montre également, en traits mixtes, un couteau 16 sur lequel peuvent reposer des crochets mobiles 15 d'une rangée de modules 14.

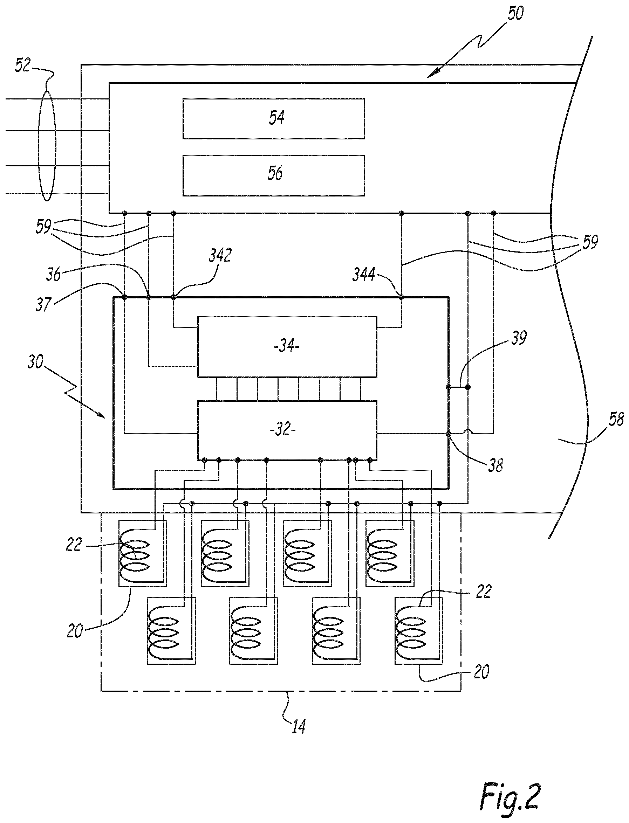

Des dispositifs de sélection électromagnétiques 20 permettent de retenir sélectivement en position haute deux des seize crochets mobiles 15 d'un module 14. Comme visible à la figure 2, chaque dispositif de sélection 20 comprend un électroaimant 22 alimenté en courant électrique en fonction de l'armure du tissu en cours de tissage sur le métier 2. Plus précisément, un électroaimant 22 est alimenté lorsqu'il doit agir sur un levier rappelé élastiquement en position par un ressort, ce levier étant alors déplacé pour retenir en position haute un crochet mobile 15.

Les dispositifs de sélection 20 sont regroupés dans les modules 14 contenant chacun huit dispositifs 20 qui sont alimentés par une unité électronique commune 30. Chaque unité 30 inclut un circuit de commande 32 comportant huit transistors non représentés ayant chacun un collecteur ouvert relié à une borne de la bobine d'un électroaimant 22. Le circuit 32 est également connecté à un registre à décalage 34 dont les sorties commandent les huit transistors. La commutation de ces transistors détermine l'état d'alimentation en courant de chaque électroaimant 22. Ainsi, chaque unité 30 commande les électroaimants 22 des huit dispositifs de sélection 20 qui lui sont raccordés. Le registre à décalage 34 est relié à une entrée série 342 et à une sortie série 344 qui sont juxtaposées aux autres entrées de la carte 30, parmi lesquelles on compte une entrée d'horloge 36, une entrée 37 d'activation de l'alimentation des électroaimants 22, une entrée 38 de tension à 16V et une liaison à la masse 39. L'unité 30 comporte également des circuits non représentés de détection de défaillance du fonctionnement des électroaimants 22. Ces circuits sont aptes à inverser le contenu du bit du registre à décalage 34 correspondant à une bobine d'électroaimant en court-circuit ou coupée. Ils mettent également à zéro tout le contenu du registre à décalage si une surchauffe est détectée dans l'unité.

De façon avantageuse, l'unité 30 comporte un ASIC (Application Specific Integrated Circuit) non représenté qui intègre le registre à décalage 34 et les huit transistors.

Plusieurs unités 30 sont connectées à un contrôleur secondaire 40A qui comprend une carte électronique 42A supportant un calculateur 44A et une mémoire 46A de type RAM. Le calculateur 44A est un microprocesseur. En variante, la carte 42A peut supporter plusieurs calculateurs ou plusieurs mémoires interconnectés entre eux.

Un contrôleur intermédiaire 50 est intercalé, électriquement, entre un groupe d'unités de commande 30 et le contrôleur secondaire 40A. Plus précisément, le contrôleur intermédiaire 50 est en liaison directe avec le contrôleur secondaire 40A à travers un faisceau de fils conducteurs 52. D'autre part, des unités de commande 30, en nombre variable compris entre deux et seize, sont raccordées en parallèle au contrôleur intermédiaire 50. Le contrôleur intermédiaire 50 comprend un calculateur 54, tel qu'un microprocesseur, ainsi qu'une mémoire 56, par exemple de type RAM ou de type FLASH.

Selon un aspect particulièrement avantageux de l'invention sur le plan structurel, quoique optionnel, un contrôleur intermédiaire 50 et les unités 30 de contrôle d'électroaimants qui lui sont raccordées en parallèle sont montées sur une même carte électronique 58. Cette carte électronique 58 supporte également des pistes conductrices qui relient électriquement le contrôleur intermédiaire 50 et les unités 30, certaines de ces pistes étant visibles à la figure 2 et repérées avec la référence 59.

En pratique, entre un et seize contrôleurs intermédiaires 50 peuvent être raccordés en parallèle sur le contrôleur secondaire 40A, chacun au moyen d'un faisceau de fils conducteurs 52. A la figure 1, seuls deux de ces contrôleurs intermédiaires 50 sont visibles.

Les contrôleurs intermédiaires 50 sont reliés directement au contrôleur secondaire 40A, c'est-à-dire sans passer par un composant ou un circuit électrique, sauf le faisceau de fils conducteurs 52. De même, les unités 30 sont reliées directement à un contrôleur intermédiaire 50. En revanche, les unités 30 sont reliées au contrôleur secondaire 40A indirectement, à travers un contrôleur intermédiaire 50.

La mécanique Jacquard 4 comprend un deuxième contrôleur secondaire 40B qui est partiellement représenté à la figure 1 et dont la carte électronique 42B porte un calculateur 44B multitâches, par exemple constitué par un microprocesseur, et une mémoire associée 46B.

Les contrôleurs 40A et 40B sont identiques.

Des faisceaux de fils conducteurs 52 relient la carte 42B à des contrôleurs intermédiaires non représentés, eux-mêmes reliés à des unités électroniques 30 non représentées qui alimentent des dispositifs de sélection électromagnétiques 20 identiques à ceux alimentés et commandés par le contrôleur secondaire 40A.

De préférence, les contrôleurs intermédiaires 50 reliés aux contrôleurs secondaires 40A et 40B sont identiques.

Le nombre de contrôleurs secondaires, du type des contrôleurs 40A et 40B incorporés à la mécanique 4 dépend du nombre de paires de crochets mobiles à commander. Il est généralement compris entre deux et douze.

Chaque contrôleur secondaire 40A ou 40B est alimenté en courant électrique, sous une tension de 16V, à partir d'une source de tension correspondante dédiée, 60A ou 60B.

Un contrôleur principal 70 est relié à un module de contrôle 26 du métier 2 qui lui fournit un signal électronique S₂₆ contenant des informations relatives au mode de fonctionnement du métier 2 qui peut être un mode de tissage normal, un arrêt d'urgence, une recherche de duites en marche lente, etc.

Le contrôleur principal 70 comprend une carte électronique 72 qui supporte un calculateur multitâche 74, par exemple de type microprocesseur, ainsi qu'une mémoire 76 de type RAM. Il est également prévu des moyens non représentés de communication entre le calculateur 74 et la mémoire 76. En variante, plusieurs calculateurs et/ou plusieurs mémoires peuvent être supportés par la carte 72. La mémoire 76 peut également être de type FLASH.

Le contrôleur 70 est également relié à un codeur 48 monté sur un arbre d'entraînement des cadres de griffes de la mécanique 4, qui permet de déterminer la position angulaire de cet arbre dans son cycle de rotation. Un signal électronique S₄₈ est fourni au contrôleur 70 par le codeur 48.

Le contrôleur principal 70 émule un écran 80 disposé au voisinage du métier 2 et auquel il est relié par une liaison filaire 82 ou par une liaison sans fil.

Un premier câble électrique 92 relie la carte 72 à la carte 42A. Un deuxième câble électrique 94 relie entre elles les cartes 42A et 42B. Un troisième câble électrique 96 relie la carte 42B à la carte 72. Il est ainsi formé une liaison électrique série 90 entre les cartes 72, 42A et 42B, cette liaison étant en boucle fermée.

Les éléments 40A, 40B, 50, 60A, 60B, 70, 80 et 90 constituent ensemble un système 100 de contrôle du fonctionnement de la mécanique 4. Les éléments 40A, 40B, 50, 60A et 60B sont intégrés à la mécanique 4, alors que les éléments 70 et 80 sont situés à l'extérieur de cette mécanique, comme représenté sur la figure 1.

La mémoire 76 est destinée à contenir l'ensemble des informations relatives à une armure à réaliser pour le tissage d'un tissu. Ces informations concernent l'ensemble des crochets de la mécanique 4 et l'ensemble des duites. Ces informations constituent des données d'armure de dessin. En outre, le processeur 74 est apte à gérer l'édition et la modification de ces données d'armure de dessin stockées ou à stocker dans la mémoire 76.

La mémoire 46A est prévue, quant à elle, pour contenir les informations d'armure de dessin pertinentes pour les dispositifs de sélection 20 alimentés et commandés par le contrôleur secondaire 40A. De la même façon, la mémoire 46B est prévue pour contenir les informations d'armure de dessin pertinentes pour les dispositifs 20 alimentés et commandés par le contrôleur secondaire 40B. En d'autres termes, les mémoires 46A et 46B contiennent uniquement des informations d'armure de dessin concernant les groupes de dispositifs 20 commandés par le contrôleur secondaire 40A ou 40B auquel elles appartiennent.

Le fonctionnement de la liaison électrique 90 est conforme à l'enseignement technique de EP-A-2 330 237.

La liaison 90 permet d'alimenter ou de « charger », avec un signal de données S₁ concernant l'état d'alimentation des électroaimants 22, les mémoires 46A et 46B avec les données pertinentes qui les concernent.

La liaison 90 sert également à véhiculer des signaux S₂ de commande pour les contrôleurs secondaires 40A et 40B.

En pratique, un signal d'alarme S₃ peut également transiter dans la liaison 90, de chacun des contrôleurs secondaires 40A ou 40B, vers le contrôleur principal 70.

Le fonctionnement en tissage normal du système de commande 100 est le suivant :
Pour chaque duite de l'armure à tisser, le calculateur 74 du contrôleur principal 70 procède à une mise en forme des données d'amure de dessin, parfois dénommée « brassage », afin de tenir compte des caractéristiques de colletage de la machine Jacquard 2, notamment de sa profondeur, du garnissage, de la répétition du motif, du type de rentrage, ...etc.

Le contrôleur principal 70 transmet à chaque contrôleur secondaire 40A, 40B les données d'armure de dessin correspondantes aux électroaimants 22 dont il gère l'état d'alimentation, à travers les contrôleurs intermédiaires 50 et les unités de commande 30 qui lui sont reliées. En pratique, pour chaque duite de l'armure de dessin sélectionnée pour le tissage, le contrôleur principal 70 détermine, pour chaque dispositif de sélection 20, l'état d'alimentation de son électroaimant 22. Le contrôleur principal 70 distingue chaque groupe de dispositif de sélection 20 appartenant à un module 14. Le contrôleur principal 70 gère la transmission des données d'armure de dessin de façon à ce que chaque contrôleur secondaire 40A, 40B dispose en permanence dans sa mémoire 46A, 46B des données d'état d'alimentation des électroaimants 22 des dispositifs de sélection 20 pour les deux duites précédant la duite en préparation, pour la duite en préparation et pour les deux duites suivantes.

Toutefois, en variante, on peut prévoir que ces mémoires contiennent uniquement les informations d'armure relatives à la duite en cours, ou à la duite en cours et à la duite précédente, ou à un autre sous-ensemble de duites.

En parallèle, au cours de chaque duite, chaque contrôleur secondaire 40A, 40B transmet séquentiellement, à chaque contrôleur intermédiaire 50 qui lui est relié, les états d'alimentation des électroaimants 22 commandés par les unités 30 reliées à ce contrôleur intermédiaire. Cette transmission des états d'alimentation des électroaimants 22 est effectuée par le microprocesseur 44A ou 44B qui met en oeuvre un double adressage-démultiplexage, de sorte à distribuer vers chaque contrôleur intermédiaire 50 les états d'alimentation correspondants aux seuls électroaimants 22 appartenant aux dispositifs de sélection 20 reliés aux unités de commande 30 présents sur la même carte électronique 58 que ce contrôleur intermédiaire. Le contrôleur intermédiaire 50 monté sur chaque carte électronique 58 se charge de transmettre, à chaque unité de commande 30 qui lui est reliée, les états d'activation des électroaimants 22 qui lui sont reliés.

On considère le cas où le contrôleur secondaire 40A est raccordé à N contrôleurs intermédiaires 50 regroupés en un premier paquet de contrôleurs intermédiaires et un deuxième paquet de contrôleurs intermédiaires, avec N un nombre entier compris entre 3 et 16. Les paquets de contrôleurs intermédiaires comprennent avantageusement un nombre de contrôleurs égal à N/2 ou N/2-1. Dans ce cas, il peut être prévu sur la carte électronique 42A deux émetteurs-récepteurs asynchrones universels ou dispositifs UART (de l'Anglais « Universal Asynchronous Receiver Trasmitter ») dédiés chacun au premier paquet de contrôleurs intermédiaires 50 ou au deuxième paquet de contrôleurs intermédiaires 50. Le calculateur 44 adresse à chacun des dispositifs UART les données d'activation des électroaimants 22 commandés par les contrôleurs intermédiaires du premier paquet, respectivement du deuxième paquet. En sortie de chaque dispositif UART est relié à un dispositif d'adressage, qui permet de répartir les données relatives aux états d'alimentation des différents électroaimants 22 entre les contrôleurs intermédiaires du premier paquet, respectivement entre les contrôleurs intermédiaires du deuxième paquet. Ces dispositifs d'adressage sont commandés par le calculateur 44A. La même structure et le même fonctionnement sont prévus pour le contrôleur secondaire 40B.

Comme le contrôleur 70 est en liaison directe avec le capteur de position angulaire 48, il connaît en permanence la position du métier, ce qui lui permet de transmettre en temps voulu l'ordre d'alimentation aux différents contrôleurs secondaires 40A et 40B, sous la forme du signal S₂. Les électroaimants 22 sont ainsi activés, au bon moment et sans défaut, par le contrôleur secondaire 40A ou 40B, le contrôleur intermédiaire 50 et l'unité de commande 30 auxquels ils sont raccordés.

Les électroaimants 22 puisent leur courant de fonctionnement à partir d'une source gérée par le contrôleur secondaire 40A ou 40B auquel ils sont reliés, par l'intermédiaire d'un contrôleur intermédiaire 50 et d'une unité de commande 30.

Comme mentionné dans EP-A-2 330 237, les registres à décalage 34 des unités de commande 30 permettent d'enregistrer l'état de fonctionnement des électroaimants 22. Plus précisément, un défaut d'électroaimant coupé, d'électroaimant en surconsommation ou en court-circuit, ou un transistor défectueux est détecté au niveau de chaque unité de commande 30 des électroaimants 22. Ce défaut est enregistré par inversion du bit correspondant dans le registre à décalage 34 de cette unité 30. Comme les entrées et les sorties des unités de commande 30, notamment des entrées 342 et les sorties 344 des registres à décalage, sont directement reliées au contrôleur intermédiaire 50 par certaines pistes 59, ce contrôleur intermédiaire 50 reçoit, dès la fin de la transmission des états d'alimentation d'une duite, le contenu des registres à décalage 34 correspondant à la duite précédente, pour l'ensemble des unités de commande 30 qui lui sont raccordées. Le calculateur 54 de chaque contrôleur intermédiaire 50 regroupe les informations correspondantes et transmet ce contenu provenant de toutes les unités de commande 30 au contrôleur secondaire 40A ou 40B auquel il est relié. Le calculateur 44A ou 44B du contrôleur secondaire peut alors procéder à une comparaison des données reçues de la part du contrôleur intermédiaire 50 avec les données qu'il avait envoyé pour la duite précédente. Le calculateur 44A ou 44B du contrôleur secondaire 40A, 40B est donc en mesure de localiser et d'analyser la nature d'éventuel(s) défaut(s). L'erreur est signalée au contrôleur principal 70, sous la forme d'un signal d'alarme S₃, qui l'exploite, en fonction du type de métier à tisser.

Ce mode de détection de défaut des dispositifs de sélection 20 n'est pas dépendant d'une connexion par limandes de câbles entre les unités 30 et les contrôleurs intermédiaires 50, ce qui améliore la fiabilité de la détection.

Par ailleurs, la transmission de données d'état d'activation des électroaimants 22 entre les contrôleurs secondaires 40A et 40B et les contrôleurs intermédiaires 50 fait l'objet d'une vérification. Plus précisément, chaque contrôleur secondaire met en place une vérification de type « checksum » sur les messages qu'il adresse aux contrôleurs intermédiaires 50. En d'autres termes, le contrôleur secondaire 40A ou 40B additionne certains nombres représentatifs des données qu'il transmet et inclut le résultat de cette addition dans les messages transmis à chaque contrôleur intermédiaire 50. A réception de ces messages, chaque contrôleur intermédiaire 50 effectue une addition de même nature, c'est-à-dire re-calcule la « checksum » sur les données reçues, et compare le résultat de cette addition avec la valeur de la « checksum » reçue. Si une différence est détectée, le contrôleur intermédiaire 50 signale une erreur de transmission au contrôleur 40A ou 40B auquel il est relié. Puis le contrôleur 40A ou 40B transmet à son tour l'information relative à cette erreur au contrôleur principal, sous la forme d'un signal d'alarme S₃. L'erreur de transmission est ainsi efficacement détectée, de même que la ligne de connexion qui a supporté cette erreur, en pratique le faisceau de fils conducteurs 52 reliant le contrôleur secondaire 40A ou 40B et le contrôleur intermédiaire 50 qui a signalé l'erreur.

Une erreur prise en compte par le contrôleur principal 70 grâce à l'un des signaux S₃ peut être signalée au métier 2.

Comme visible à la figure 3, le contrôleur secondaire 40A peut être monté sur un bâti 41 de la mécanique Jacquard 4 en étant relié par le câble 92 au contrôleur principal 70. Les cartes électroniques 58 qui supportent les contrôleurs intermédiaires 50 et les unités de commande 30 sont immobilisées sur le bâti 41. Les cartes électroniques 58 sont disposées verticalement, parallèlement aux couteaux 16 et au-dessus des modules 14. Chaque carte électronique 58 comprend des languettes 582 dédiées chacune au branchement d'un unique module 14.

A la figure 3, pour la clarté du dessin, les pistes 59 ne sont pas représentées. En revanche, les faisceaux de fils conducteurs 52, qui relient chaque carte électronique 58 au contrôleur secondaire 40A sont visibles. Ils s'étendent globalement au-dessus des cartes 58 et ne gênent pas l'accès aux modules 14, en cas de nécessité. On remarque par ailleurs que, au niveau des modules 14, il n'est plus nécessaire d'avoir recours à des liaisons par câble de type limande.

Comme visible à la figure 3, le raccordement entre un module 14 et une carte électronique 58 a lieu sans utiliser de câble électrique, en enfichant les languettes 582 de la carte électronique 58 sur les modules 14, dans le sens de la flèche F1.

En cas de besoin, notamment en cas de défaut détecté sur un contrôleur intermédiaire 50 ou sur l'une des unités 30 qui lui sont connectées, la carte électronique 58 qui supporte ce contrôleur fait l'objet d'un échange standard, d'une façon rapide et aisée. Ainsi, chaque carte électronique 58 est une pièce détachée pour le système 100.

L'invention peut également être mise en oeuvre avec un métier à tisser équipé de deux mécaniques Jacquard, comme envisagé dans le deuxième mode de réalisation de EP-A-2 230 237.

L'adaptation du système de contrôle 100 au format du métier 2 et de la mécanique 4 a lieu en adaptant le nombre de contrôleurs secondaires 40A, 40B, ... qui sont intégrés à la boucle de commande.

L'invention a été représentée dans le cas où la ou chaque mécanique Jacquard comprend deux contrôleurs secondaires 40A, 40B. Le nombre de ces contrôleurs secondaires présents au sein de chaque mécanique Jacquard peut être supérieur à deux, par exemple compris entre trois et douze.

L'invention a été représentée dans le cas où les contrôleurs secondaires sont intégrés à une mécanique Jacquard, alors que le contrôleur principal est disposé à l'extérieur de cette machine. En variante, le contrôleur principal peut être intégré à la ou à l'une des mécaniques Jacquard.

L'invention s'applique également aux mécanismes Jacquard destinés aux métiers de tissage de tapis, c'est-à-dire dont les dispositifs de sélection permettent le choix d'une position de l'arcade parmi plus de deux positions.

Les caractéristiques techniques des modes de réalisation et variantes envisagées ci-dessus peuvent être combinées entre elles.

## Revendications

1. Système de contrôle d'au moins une machine Jacquard (4) de formation de la foule comprenant des dispositifs de sélection électromécaniques (20) incluant des électroaimants (22), ce système comprenant :
- un contrôleur principal (70) destiné à communiquer avec un métier à tisser (2) équipé de la machine Jacquard (4) et comportant au moins une mémoire (76) pour le stockage de données d'armure de dessin et au moins un calculateur (74) apte à gérer l'édition et la modification des données d'armure,
- au moins deux contrôleurs secondaires (40A, 40B), connectés chacun électriquement au contrôleur principal et aptes à commander chacun un groupe de dispositifs de sélection électromécaniques (20), chaque contrôleur secondaire comprenant au moins une mémoire (46A, 46B) pour le stockage de données d'armure de dessin et au moins un calculateur (44A, 44B),
- des unités (30) de commande des électroaimants (22) associées chacune à au moins un dispositif de sélection électromécanique (20), chaque unité de commande étant connectée électriquement à un contrôleur secondaire (40A, 40B) et comprenant un registre à décalage (34) de réception des états d'activation des électroaimants qu'elle commande,
ce système de contrôle étant **caractérisé en ce qu'**il comprend au moins un contrôleur intermédiaire (50) en liaison électrique directe, d'une part, avec un des contrôleurs secondaires (40A, 40B) et, d'autre part, avec au moins deux unités (30) de commande d'électroaimants (22).

2. Système selon la revendication 1, **caractérisé en ce que** les unités (30) de commande d'électroaimants (22) sont reliées électriquement en parallèle avec le contrôleur intermédiaire (50).

3. Système selon l'une des revendications précédentes, **caractérisé en ce que** chaque unité (30) de commande d'électroaimants (22) est pourvue de moyens de détection de défaut d'un des électroaimants qu'elle contrôle.

4. Système selon la revendication 3, **caractérisé en ce que** les moyens de détection de défaut comprennent un circuit qui intègre le registre à décalage (34) et des transistors d'alimentation des électroaimants (22) commandés par l'unité (30) de commande des électroaimants (22).

5. Système selon l'une des revendications 3 ou 4, **caractérisé en ce que** chaque contrôleur intermédiaire (50) est configuré pour signaler, au contrôleur secondaire (40A, 40B) avec lequel il est en liaison électrique, un défaut détecté par une unité (30) de commande d'électroaimants (22) avec laquelle il est en liaison électrique.

6. Système selon l'une des revendications précédentes, **caractérisé en ce que** chaque contrôleur intermédiaire (50) est configuré pour effectuer une vérification de la transmission, entre le contrôleur secondaire (40A, 40B) avec lequel il est en liaison électrique et lui-même, de données d'activation des électroaimants (22) commandés par les unités de commande (30) avec lesquelles il est en liaison électrique.

7. Carte électronique (58) formant pièce détachée pour un système (100) selon l'une des revendications précédentes, **caractérisée en ce qu'**elle comporte un contrôleur intermédiaire (50), toutes les unités (30) de commande d'électroaimants (22) connectées à ce contrôleur intermédiaire, ainsi que des pistes (59) de liaison entre ce contrôleur et ces unités de commande et **en ce que** chaque unité de commande (30) de la carte électronique (58) est associée à au moins un dispositif de sélection électromécanique (20) et comprend un registre à décalage (34) de réception des états d'activation des électroaimants (22) qu'elle commande.

8. Mécanique Jacquard (4) comprenant des dispositifs de sélection électromécaniques (20), incluant chacun un électroaimant (22), ainsi que des unités (30) de commande de ces électroaimants, **caractérisée en ce qu'**elle comprend un système de contrôle (100) selon l'une des revendications 1 à 6 et **en ce que** les unités (30) de commande sont chacune reliées électriquement à un contrôleur intermédiaire (50) du système de contrôle.

9. Mécanique Jacquard selon la revendication 8, **caractérisée en ce que**
- les électroaimants (22) sont regroupés dans des modules (14) qui contiennent également des crochets mobiles (15) animés d'un mouvement d'oscillations verticales et cinématiquement reliés à des éléments funiculaires (13) de suspension d'arcades (12) d'un harnais Jacquard,
- chaque contrôleur intermédiaire (50), toutes les unités (30) de commande d'électroaimants (22) électriquement connectés à ce contrôleur intermédiaire, ainsi que des pistes (59) de liaison électrique entre ce contrôleur et ces unités de commande sont regroupées sur une même carte électronique (58) et
- les modules (14) contenant les électroaimants (22) commandés par les unités de commande (30) regroupées sur une même carte électronique (58) sont directement raccordés à cette carte, sans utilisation de câbles électriques.

10. Métier à tisser (2) équipé d'une mécanique Jacquard (4) selon l'une des revendications 8 ou 9.

## Patentansprüche

1. Kontrollsystem für mindestens eine Jacquard-Maschine (4) zur Webfachausbildung, elektromechanische Selektionsvorrichtungen (20) umfassend, die Elektromagnete (22) enthalten, wobei dieses System umfasst:
- eine Hauptkontrolleinrichtung (70), die dazu bestimmt ist, mit einem Webstuhl (2) zu kommunizieren, der mit der Jacquard-Maschine (4) ausgestattet ist und mindestens einen Speicher (76) zum Speichern von Webmusterbindungsdaten und mindestens einen Rechner (74) hat, der die Ausgabe und Modifizierung der Bindungsdaten anleiten kann,
- mindestens zwei sekundäre Kontrolleinrichtungen (40A, 40B), die jeweils elektrisch an die Hauptkontrolleinrichtung angeschlossen sind und jeweils eine Gruppe elektromechanischer Selektionsvorrichtungen (20) steuern können, wobei jede sekundäre Kontrolleinrichtung mindestens einen Speicher (46A, 46B) zum Speichern von Webmusterbindungsdaten und mindestens einen Rechner (44A, 44B) umfasst,
- Steuereinheiten (30) für die Elektromagneten (22), die jeweils mindestens einer elektromechanischen Selektionsvorrichtung (20) zugeordnet sind, wobei jede Steuereinheit elektrisch an eine sekundäre Kontrolleinrichtung (40A, 40B) angeschlossen ist und ein Schieberegister (34) zur Aufnahme der Aktivierungszustände der Elektromagnete umfasst, die sie steuert,
wobei dieses System **dadurch gekennzeichnet ist, dass** es mindestens eine Zwischenkontrolleinrichtung (50) umfasst, die einerseits mit einer der sekundären Kontrolleinrichtungen (40A, 40B) und andererseits mit mindestens zwei Steuereinheiten (30) für Elektromagnete (22) direkt in elektrischer Verbindung steht.

2. System nach Anspruch 1, **dadurch gekennzeichnet, dass** die Steuereinheiten (30) für die Elektromagnete (22) mit der Zwischenkontrolleinrichtung (50) elektrisch parallelgeschaltet sind.

3. System nach einem der vorhergehenden Ansprüche, **dadurch gekennzeichnet, dass** jede Steuereinheit (30) für die Elektromagnete (22) mit Einrichtungen zur Fehlererkennung eines der Elektromagnete, die sie kontrolliert, versehen ist.

4. System nach Anspruch 3, **dadurch gekennzeichnet, dass** die Einrichtungen zur Fehlererkennung einen Schaltkreis umfassen, der das Schieberegister (34) und Speisetransistoren für die Elektromagnete (22) integriert, die von der Steuereinheit (30) für die Elektromagnete (22) gesteuert werden.

5. System nach Anspruch 3 oder 4, **dadurch gekennzeichnet, dass** jede Zwischenkontrolleinrichtung (50) dazu konfiguriert ist, der sekundären Kontrolleinrichtung (40A, 40B), mit der sie in elektrischer Verbindung steht, einen durch die Steuereinheit (30) für die Elektromagnete (22), mit der sie in elektrischer Verbindung steht, erkannten Fehler zu melden.

6. System nach einem der vorhergehenden Ansprüche, **dadurch gekennzeichnet, dass** jede Zwischenkontrolleinrichtung (50) dazu konfiguriert ist, eine Verifizierung der Übertragung zwischen der sekundären Kontrolleinrichtung (40A, 40B), mit der sie in elektrischer Verbindung steht, und sich selbst, von Aktivierungsdaten für die Elektromagnete (22) durchzuführen, die von den Steuereinheiten (30) gesteuert werden, mit denen sie in elektrischer Verbindung steht.

7. Elektronische Karte (58), die ein Ersatzteil für ein System (100) nach einem der vorhergehenden Ansprüche bildet, **dadurch gekennzeichnet, dass** sie eine Zwischenkontrolleinrichtung (50), wobei alle Steuereinheiten (30) für Elektromagnete (22) an diese Zwischenkontrolleinrichtung angeschlossen sind, und Verbindungsbahnen (59) zwischen dieser Kontrolleinrichtung und diesen Steuereinheiten umfasst, und dass jede Steuereinheit (30) der elektronischen Karte (58) mindestens einer elektromechanischen Selektionsvorrichtung (20) zugeordnet ist und ein Schieberegister (34) zur Aufnahme der Aktivierungszustände der Elektromagnete (22) umfasst, die sie steuert.

8. Jacquard-Maschine (4) mit elektromechanischen Selektionsvorrichtungen (20), die jeweils einen Elektromagneten (22) sowie Steuereinheiten (30) für diese Elektromagneten umfasst, **dadurch gekennzeichnet, dass** sie ein Kontrollsystem (100) nach einem der Ansprüche 1 bis 6 umfasst, und dass die Steuereinheiten (30) jeweils elektrisch mit einer Zwischenkontrolleinrichtung (50) des Kontrollsystems verbunden sind.

9. Jacquard-Maschine nach Anspruch 8, **dadurch gekennzeichnet, dass**
- die Elektromagnete (22) in Modulen (14) zusammengefasst sind, die auch bewegliche Haken (15) enthalten, die mit einer Bewegung vertikaler Oszillationen angeregt werden und kinematisch mit Seilbahnelementen (13) zur Aufhängung von Aufhebern (12) eines Jacquard-Webgeschirrs verbunden sind,
- jede Zwischenkontrolleinrichtung (50), alle Steuereinheiten (30) für die Elektromagnete (22), die elektrisch an diese Zwischenkontrolleinrichtung angeschlossen sind, sowie elektrische Verbindungsbahnen (59) zwischen dieser Kontrolleinrichtung und diesen Steuereinheiten auf ein und derselben elektronischen Karte (58) zusammengefasst sind, und
- die Module (14), welche die Elektromagneten (22) enthalten, die von den auf ein und derselben elektronischen Karte (58) zusammengefassten Steuereinheiten (30) gesteuert werden, ohne Verwendung von elektrischen Kabeln direkt an diese Karte angeschlossen sind.

10. Webstuhl (2), der mit einer Jacquard-Maschine (4) nach einem der Ansprüche 8 oder 9 ausgestattet ist.

## Claims

1. A control system for at least one Jacquard mechanism (4) for forming shed comprising electromechanical selection devices (20) including electromagnets (22), this system comprising:
- a primary controller (70) intended to communicate with a weaving machine (2) equipped with the Jacquard mechanism (4) and including at least one memory (76) to store weave pattern data and at least one computer (74) able to generate the publication and modification of this pattern data,
- at least two secondary controllers (40A, 40B), each electrically connected to the primary controller and each able to control a group of electromechanical selection devices (20), each secondary controller comprising at least one memory (46A, 46B) for storing weave pattern data and at least one computer (44A, 44B),
- electromagnet (22) control units (30) each associated with at least one electromechanical selection device (20), each control unit being electrically connected to a secondary controller (40A, 40B) and comprising a shift register (34) for receiving activation states of the electromagnets that it controls,
this control system being **characterized in that** it comprises at least one intermediate controller (50) in direct electrical connection, on the one hand, with one of the secondary controllers (40A, 40B) and, on the other hand, with at least two electromagnet (22) control units (30).

2. The system according to claim 1, **characterized in that** the electromagnet (22) control units (30) are electrically connected in parallel with the intermediate controller (50).

3. The system according to one of the preceding claims, **characterized in that** each electromagnet (22) control unit (30) is provided with means for detecting a fault of one of the electromagnets that it controls.

4. The system according to claim 3, **characterized in that** the fault detection means comprise a circuit that incorporates the shift register (34) and supply transistors of the electromagnets (22) controlled by the control unit (30) of the electromagnets (22).

5. The system according to one of claims 3 or 4, **characterized in that** each intermediate controller (50) is configured to signal, to the secondary controller (40A, 40B) with which it is electrically connected, a fault detected by an electromagnet (22) control unit (30) with which it is electrically connected.

6. The system according to any one of the preceding claims, **characterized in that** each intermediate controller (50) is configured to verify the transmission, between the secondary controller (40A, 40B) with which it is electrically connected and itself, of activation data for the electromagnets (22) controlled by the control units (30) with which it is electrically connected.

7. An electronic board (58) forming a spare part for a system (100) according to one of the preceding claims, **characterized in that** it includes an intermediate controller (50), all of the electromagnet (22) control units (30) that are connected to this intermediate controller, as well as connecting tracks (59) between the controller and these control units, and **in that** each control unit (30) of the electronic board (58) is associated with at least one electromechanical selection device (20) and comprises a shift register (34) receiving activation states of the electromagnets (22) that it controls.

8. A Jacquard mechanism (4) comprising electromechanical selection devices (20), each including an electromagnet (22), as well as control units (30) for said electromagnets, **characterized in that** it comprises a control system (100) according to one of claims 1 to 6 and **in that** the control units (30) are each electrically connected to an intermediate controller (50) of the control system.

9. The Jacquard mechanism according to claim 8, **characterized in that**
- the electromagnets (22) are grouped together in modules (14) that also contain moving hooks (15) driven with a vertical reciprocating movement and kinematically connected to funicular arch (12) suspension elements (13) of a Jacquard harness,
- each intermediate controller (50), all of the electromagnet (22) control units (30) connected to this intermediate controller, as well as electrical connecting tracks (59) between this controller and these control units are grouped together on a same electronic board (58), and
- the modules (14) containing the electromagnets (22) controlled by the control units (30) grouped together on a same electronic board (58) are directly connected to that board, without using electrical cables.

10. A weaving machine (2) equipped with a Jacquard mechanism (4) according to one of claims 8 or 9.
